# EUROPEAN PATENT SPECIFICATION

(11) **EP 1 257 992 B1**
(45) Date of publication and mention of the grant of the patent: **14.02.2007**
(21) Application number: 00986696.3
(22) Date of filing: 21.12.2000
(51) Int. Cl.: G09F 23/10, G09F 23/00

(54) **TARGET ADVERTISING PRINTED ON AN ELECTRONIC TRANSACTION DOCUMENT**
GEZIELTE ANZEIGEN, DIE AUF EIN ELEKTRONISCHES TRANSAKTIONSDOKUMENT AUFGEDRUCKT WERDEN
PUBLICITE CIBLE IMPRIMEE SUR UN DOCUMENT DE TRANSACTION ELECTRONIQUE

(30) Priority: 30.12.1999 US 475431
(43) Date of publication of application: 20.11.2002
(73) Proprietor: PITNEY BOWES INC., Stamford, CT 06926 (US)
(72) Inventor: BREWSTER, William, H., Jr., Fairfield, CT 06482 (US); HEIDEN, Richard, W., Huntington, CT 06484 (US); KAYE, Stephen, M., Weston, CT 06883 (US); MALANDRA, Charles, R., Jr., Monroe, CT 06468 (US); PIERCE, Jeffrey, D., Sandy Hook, CT 06482 (US); RYAN, Frederick, W., Jr., Oxford, CT 06478 (US)
(74) Representative: HOFFMANN EITLE
(86) International application number: PCT/US2000/035003
(87) International publication number: WO 2001/050446

(56) References cited:
- DE-U1- 29 613 910
- US-A- 6 129 274
- US-A- 6 141 654
- FOLEY JOHN: 'Market of one -- ready, aim, sell!-- technology is helping companies treat their best customers like individuals again. The payoff - and the challenges - can be enormous' February 1997, pages 1 - 5, XP002938635

## Description

This invention relates generally to methods of the delivery of advertisements, and in particular is directed to targeting of advertisements delivered through electronic transactions.

The present specification is related to US 09/224, 256 published as US-A-6 970 856.

Reference is also directed to DE 29613910 U1 and to the article entitled "Market of One - Ready, Aim, Sell! - Technology is helping companies treat their best customers like individuals again. The payoff - and the challenges - can be enormous" by John Foley published in February 1997 as XP002938635. This article describes a system for printing personalised advertisements on a customer's monthly statement.

For several years, the Internet has been available for searching and collecting information. In the last two years, the Internet has exploded as a method of concluding electronic transactions. As the number of individuals and companies accessing the Internet has increased, so has the number of web sites available for accessing. Many companies have web sites, which provide information concerning available products and services as well as organizational information concerning the companies. Most recently, the security of communications over the Internet has increased to a level at which companies offer and individuals feel comfortable enough to conduct electronic transactions over the Internet. As a result, commercial transactions, such as purchasing tickets, ordering retail products, purchasing and selling stock and conducting banking transactions, are now concluded on a regular basis. Startup "dot com" companies are popping up with products and/or services never before imaginable as viable commercial endeavors.

For several years, on-line advertising on the Internet has been used as a source of revenue or a way to defer costs for Internet servers, browsers or web sites. Typically, on-line advertisements appear on a web page, in the form of a banner at the top or bottom of the page. When a user views a web page using a browser, such as Microsoft Internet Explorer or Netscape Navigator, a banner ad appears on the web page and the user has the option to find out more information concerning the advertisement by selecting, i.e. clicking on, the banner. This action causes the browser to retrieve a web site associated with the banner ad for display on the user's computer. Although banner advertising may be linked to the web site selected by the user, typically, such banner advertising is untargeted advertising, i.e., not directed to a specific potential customer base. However, the use of banner ads has limited value, because the individual accessing the web site may not be interested in the ad, and in fact, may totally disregard the ad and may even consider the banner ad to be a nuisance. In fact, programs are now available which run on a user's PC to filter banner ads and remove them from a web page before it is displayed on a user's screen

In U.S. Patent No. 5,948,061, method and apparatus for targeting the delivery of advertisements over a network such as the Internet are disclosed. Statistics are compiled on individual users and networks and the use of the advertisements is tracked to permit targeting of the advertisements of individual users. In response to requests from affiliated sites, an advertising server transmits to people accessing the page of a site an appropriate one of the advertisements based upon profiling of users and networks.

In U.S. Patent No. 5,598,477, system and method for issuing and validating tickets through an electronic transaction is disclosed. The system includes a data processing system for receiving ticket request information and generating ticket information, which includes encrypted validating information. A local printing system receives the ticket information and prints the encrypted validating information on a ticket in machine-readable format. The ticket is then validated through a validating system that converts the encrypted validating information into a digital format, decrypts the validating information, tests the validating information to validate the ticket. The data processing system receives an itinerary from a purchaser, checks a reservation system to determine service availability and provides service availability information to the purchaser who selects appropriate services and submits ticket request information. The data processing system then generates ticket information including encrypted validating information and transmits the ticket information to the local printing system which prints a ticket having the encrypted validating information printed in a machine readable format.

It is known to print selected messages (sometimes referred to as ad slogans although such messages are not restricted to advertisements) along with a postal indicium. Generally, the message bears no relation to the postal indicium. In traditional postage meters employing either rotary drum or flat bed printing technology, the message was printed along with the postal indicium by including an additional printing die representative of the message. Examples of die based systems for printing messages are disclosed in U.S. Patent No. 5,168,804 and U.S. Patent No. 5,024,153. More recently, the postage meter industry has begun to incorporate digital (dot matrix) printing technology which obviates the need for dies as the digital printer may be supplied with suitable drive signals to effect printing of the message. Examples of digital printing technology based systems for printing messages are disclosed in U.S. Patent No. 4,831,554 and U.S. Patent No. 5,509,109.

Additionally, U.S. Patent No. 4,831,554 teaches a system that allows the postage meter manufacturer to broker the use of advertising space by third parties on the envelopes. In concept, a third party advertiser may wish to take advantage of the space on the outgoing envelopes from a particular postage meter user to advertise its own products and/or services. In this system, a message, the content of which originates from a third party, is stored electronically within the postage meter. The postage meter keeps a count of the number of times that the message is printed in conjunction with a postal indicium. This count is then used by the data center to provide a subsidy to the postage meter user during a subsequent billing cycle and is correspondingly used by the data center to invoice the third party advertiser.

Although this brokering system in U.S. Patent No. 4,831,554 represents a new business opportunity for postage meter manufacturers, it suffers from certain drawbacks and disadvantages. First, the third party advertiser cannot exercise any control over when the message is dispensed. Thus, if the message is time sensitive, then the relevance of the message may be lost after a certain date and the third party advertiser would be compelled to pay for advertising that was not effective. For example, advertisements directed to promotions that have expiration dates (rebate programs, concert tickets, limited time offers, etc.) are useless once the relevant time period has passed. Second, the third party advertiser cannot exercise any control over the number of messages dispensed. Thus, if the third party advertiser allocated a fixed advertising budget and accordingly only wanted to pay for a limited number envelopes containing the message, then the third party advertiser may be compelled to pay for advertising that was not wanted if the postage meter user generates increased mail volume over that which was anticipated. Third, the third party advertiser cannot exercise any control over the recipient of the message. Thus, the third party advertiser has no assurance that a target audience would be reached. For example, advertisements (e.g. sports related or hair loss, as examples) intended primarily for males may not be relevant if the recipient of the envelope from the postage meter user was a female. Fourth, the third party advertiser cannot exercise any control over the geographic reach of the message. Here again, the third party advertiser has no assurance that the target audience would be reached. For example, advertisements (e.g. local car dealership or cleaning service, as examples) intended for a certain limited geographic region would not be relevant if the recipient of the envelope from the postage meter user was located many miles away from the certain limited geographic region. As a related example, advertisements intended for the certain limited geographic region on envelopes originating from outside of the certain limited geographic region would not benefit from the increased good will of being associated with a sender in the certain limited geographic region.

Related U.S. Patent No. 6,970,856 provides an improved system that allows the postage meter manufacturer to broker the use of advertising space by third parties on envelopes In a more effective manner so that third party advertisers are more likely to reach their target audiences.

There is a need for an improved system for advertising on Internet transactions, i.e. one in which the third party advertisers would be willing to pay higher fees resulting in an increased economic incentive for third party advertisers and Internet users to participate.

### Summary of the Invention

The present invention provides a system and methods for improving the effectiveness of third party advertising on printed documents, particularly those documents that are produced because of electronic transactions. Generally, this is accomplished by letting the third party advertisers establish restrictions or limits on the documents on which they would like to place their messages. The restrictions may be based upon user parameters (e.g., type of transaction, location of user/event or type of content), consumer parameters (e.g., location of consumer, demographics or other consumers with similar profiles), quantitative parameters (e.g., value of transaction or number of transactions) or some combination of the above.

In accordance with the present invention, a transaction evidencing system comprises a computer, a data center and a control system. The computer is in operative communication with a printer for printing evidence of a transaction, such as receipts and tickets. The data center includes a processor that is in operative communication with the computer, which is located remotely from the data center. The data center processor processes electronic transactions initiated at the computer and maintains databases used for identifying advertisement messages for the electronic transactions. The data center includes a plurality of user accounts and a plurality of advertiser accounts where each of the plurality of advertiser accounts includes respective ad data including message data and restriction data limiting the use of the message data. The control system is in operative communication with the data center and the computer and is for: (i) establishing a transaction session between the computer corresponding to one of the plurality of user accounts and the data center; (ii) obtaining information about the user; and (iii) using the user information and the restriction data from the plurality of advertiser accounts to identify message data available for printing along with the transaction evidencing document.

In an alternative embodiment, the data center function of the preferred embodiment is divided between at least two parties. The computer is in operative communication with a transaction processor that is remote from the computer. The transaction processor is in operative communication with a separate data center processor that maintains databases used for identifying advertisement messages for the electronic transactions.

In accordance with the present invention, one or more advertising messages may be automatically selected for printing on the transaction evidencing document. Alternatively, a subset of targeted advertising messages may be selectable by the user, by the data center or by the advertiser, or by some combination of all three. Additionally, if the transaction is paid for by credit card, the credit card processor may selectively target a particular advertising message based on the credit card processor's information from previous transactions using the credit card.

Finally, in accordance with the present invention, a method of operating a transaction evidencing system and a method of operating a data center concerning target advertising are also provided.

Therefore, it is now apparent that the present invention substantially overcomes the disadvantages associated with the prior art. Additional advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

### Brief Description of the Drawings

The accompanying drawings, which are incorporated in and constitute a part of the specification, illustrate presently preferred embodiments of the invention, and together with the general description given above and the detailed description of the preferred embodiments given below, serve to explain the principles of the invention. As shown throughout the drawings, like reference numerals designate like or corresponding parts.

Fig. 1 is a simplified representation of a transaction evidencing system including a data center and a plurality of remotely located computer systems in electronic communication with the data center in which the present invention may be incorporated.

Fig. 2A is a front view of a transaction evidencing document in the form of a ticket that has been processed by the transaction evidencing system in accordance with the present invention.

Fig. 2B is a front view of a transaction evidencing document in the form of a receipt that has been processed by the transaction evidencing system in accordance with the present invention.

Fig. 3 is a detailed representation of a first embodiment of the transaction evidencing system in accordance with the present invention.

Fig. 4 is a flow chart showing the operation of the transaction evidencing system in accordance with the present invention.

Fig. 5 is a schematic representation of an ad data file associated with a third party message to be printed on the transaction evidencing document by the transaction evidencing system in accordance with the present invention.

### Detailed Description of the Preferred Embodiments

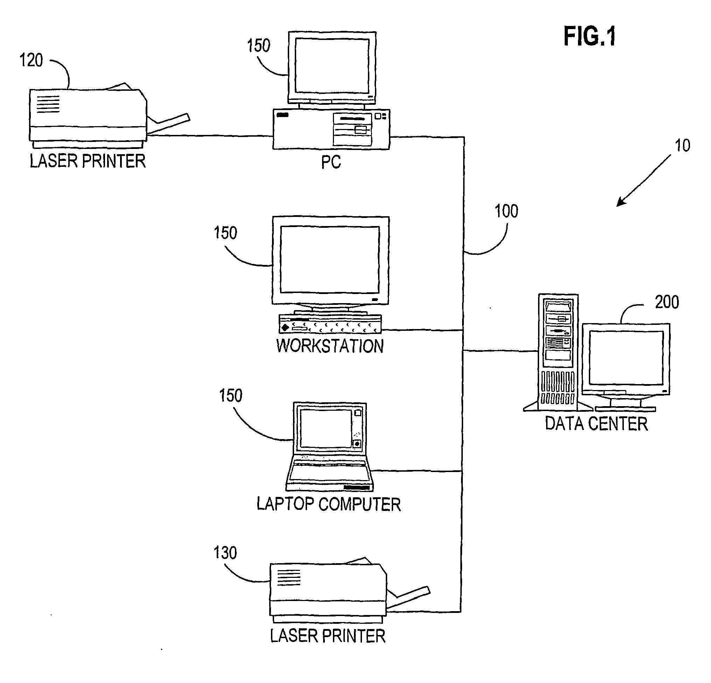

Referring to Fig. 1, an example of a transaction evidencing system 10 indicative of one example of an electronic commerce environment in which the present invention may be incorporated is shown. Generally, the transaction evidencing system 10 includes a data center 200 in communication over any suitable communication network 110 (LAN, WAN, telephone line, Internet, etc.) with a plurality of remotely located computers 150. The present invention is suitable for various computer systems operating as computers 150 communicating over a network. For example, computers 150 may be personal computers at home, workstations in an office, kiosks or ATMs in a mall, or cash registers in a retail store. Alternatively, the present invention may be implemented with a direct dial connection between computers 150 to data center 200 (not shown). It is anticipated that when computers 150 are located in small business offices and/or in private residences, computers 150 would be used for a variety of purposes including purchasing tickets, purchasing gift certificates and purchasing goods and services. The data center 200 is maintained and operated by a content provider, such as a merchant, a service provider or a third party transaction brokering service. The computers 150 may be connected directly to a printer 120 or have access to a printer 130 over the suitable communication network 110. Those skilled in the art will recognize that not each computer 150 need utilize the same network 110 in contacting the data center 200. Likewise, the computer 150 may use one type of network 110 with the data center 200 and a different type of network with the printer 130. The remotely located computers 150 are representative of users wanting to print transaction evidencing documents as evidence of an electronic transaction.

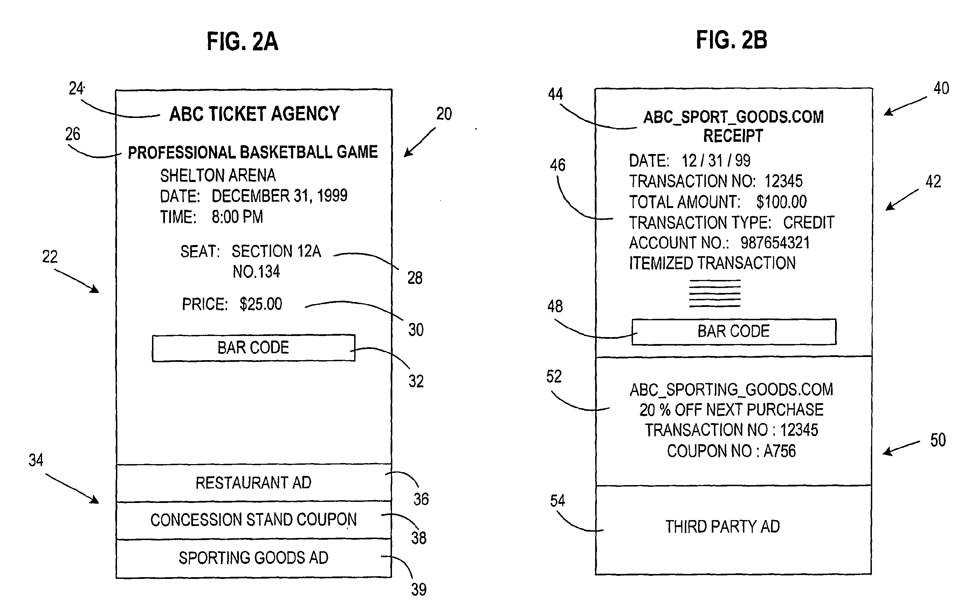

Referring now to Fig. 2A, an example of a transaction evidencing document, generally designated 20, is in the form of a ticket to a sporting event. Transaction evidencing document 20 includes a ticket section generally designated 22, comprising the identification of the ticketing party 24, identification of the event 26, location of the seats 28, price 30 and a bar code 32 that includes cryptographic validation information for authenticating the ticket. Transaction evidencing document 20 further includes an advertising section, generally designated 34 in which one or more advertisements may be printed. In Fig. 2A, a restaurant ad 36 for a restaurant local to the sporting event, a coupon 38 for a concession stand at the sporting event, and a national sporting goods ad 39 are printed with the ticket. It will be understood that the advertisers may find it desirable to have the advertisements placed at certain locations within transaction evidencing document 20 so that the user's attention may be more likely directed to the advertisement.

Referring now to Fig. 2B, another example of a transaction evidencing document, generally designated 40, in the form of a receipt for an electronic transaction to purchase a product or service. The transaction evidencing document 40 includes a receipt section, generally designated 42, comprising an identification of the merchant 44 that is selling the product or service, transaction information 46 and a bar code 48 that includes cryptographic validation information for authenticating the payment for the product or service. The transaction information includes a transaction number, amount of the transaction, transaction type, account number and an itemized listing of the transaction. The transaction evidencing document 40 further includes an advertising section, generally designated 50, in which one or more advertisements may be printed. In Fig. 2B, a coupon 52 that is good for future purchases from the merchant includes a discount amount, the transaction number and a coupon number. When using coupon 52 for a subsequent purchase, entry of the transaction number and coupon number may be enough to validate the coupon. Additional limitations may be added to prevent misuse of the coupon. For example, the coupon may be considered valid only if used in conjunction with the particular user identification or a particular credit card number. Also shown in Fig. 2B, is a third party ad 54 that is targeted to the user, for example by the credit card issuer that is performing the transaction.

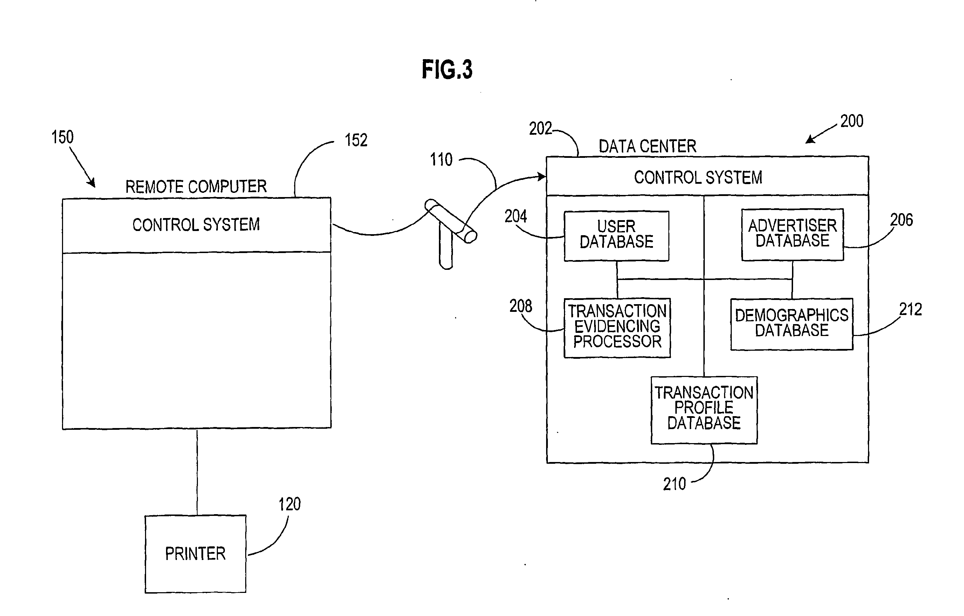

Referring now to Fig. 3, a more detailed schematic of the transaction evidencing system 10 is shown. The remote computer 150 includes a control system 152 that is in communication over a suitable communication network 110, such as: telephone lines, public and private network systems (Internet) or the like; with a control system 202 from the data center 200. The data center 200 may be based on any conventional computer based platform (PC, server, workstation, mainframe or the like) and includes the control system 202, a user database 204, an advertiser database 206, a transaction evidencing processor 208, a transaction profiling database 210 and a demographics database 212, all of which are in operative communication with each other using conventional means.

In a preferred embodiment of the present invention, all of these databases reside at a third party data center operated by, for example, a credit card processor, a party operating other data centers, such as Pitney Bowes Inc., Starnford, Connecticut, USA, or the merchant soliciting the transaction. In an alternative embodiment, a subset of these databases may reside at one or more data centers operated by one or more of such parties whereby the completion of the electronic transaction including the advertising function is shared by the data centers.

The user database 204 contains information concerning individual user accounts, such as: user name, user address, preferred payment vehicle or arrangements (periodic invoice, direct credit card authorization, electronic funds transfer, etc.), and the like, that have been established with data center 200. Similarly, the advertiser database 206 contains information concerning individual advertiser accounts, such as: advertiser name, advertiser address, preferred payment vehicle or arrangements (periodic invoice, direct credit card authorization, electronic funds transfer, etc.), ad data and the like, that have been established with the data center 200. The transaction profiling database 210 may employ any suitable database containing statistics relevant to certain types of transactions. Examples of these statistics include: value of transaction, category of transaction (e.g., concert ticket, article purchase, gift certificate), frequency of transaction, history of users that have made similar transactions, location of event related to transaction (e.g., airline ticket departure and destination, concert location). The demographics database 212 may employ any suitable database containing statistics relevant to certain parameters, such as geographic locations and spending habits. As examples, various databases exist that contain detailed demographic information by zip code, such as: PRIZM available from Claritas Inc. (see Internet URL www.claritas.com), United States census information or any other database that is generally known and commercially available. Databases that profile user spending habits and purchase history are commonly maintained by credit card issuers.

The transaction evidencing processor 208 accurately records, tracks and accounts for the payment received or billed for an electronic transaction that results in a transaction evidencing document being printed. In the preferred environment, the transaction evidencing processor 208 is operated by the content provider (e.g. an airline selling tickets which a user can print). In an alternative environment, a third party, such as the third party operating data center 200 may operate transaction evidencing processor 208 for one or more content providers. This has the added benefit that the third party can pool the data from multiple content providers to produce more complete databases which result in more targeted advertising. In yet another environment, a third party may operate the databases used for ad selection as a service to the content providers.

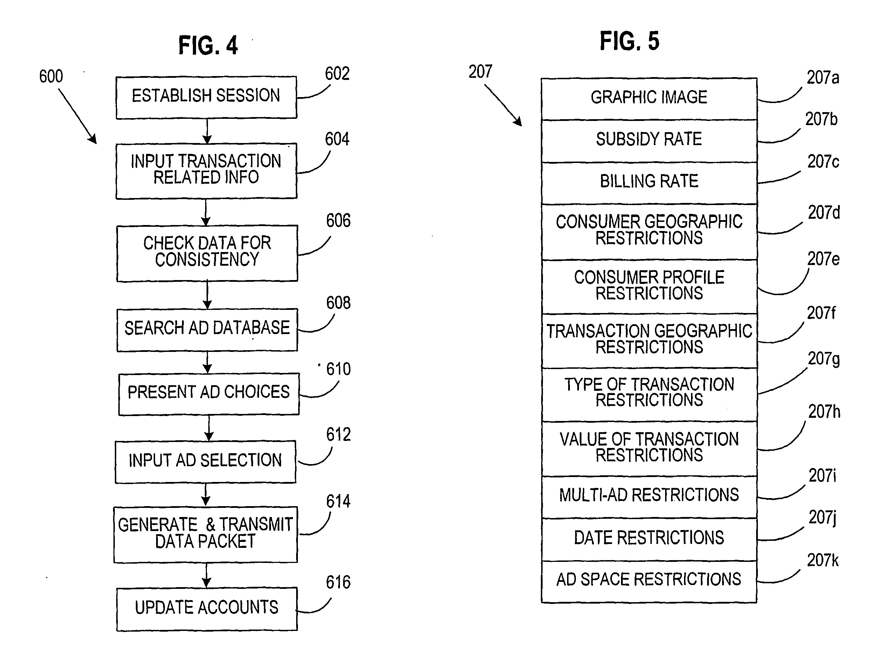

With the structure of the transaction evidencing system 10 described as above, the operational characteristics will now be described with respect to a typical transaction conducted between the remote computer 150 and the data center 200. Referring now primarily to Fig. 4 while referencing the structure of Figs. 1, 2 and 3, a flow chart of a transaction routine 600 in accordance with the present invention is shown. The transaction routine 600 may be comprised of any suitable combination of software, firmware and hardware subsystems executed by the remote computer control system 152 and the data center control system 202. Generally, the activities of the data center 200 are such that they may be fully automated. On the other hand, the remote computer 150 includes a suitable user interface (such as a display with keyboard having menu driven functionality) for communicating with the user. For the sake of clarity and brevity, it is assumed that the user maintains a valid account with the data center 200. This account may be established at the time of an initial transaction by the user. It is also assumed that the provider desires to include third party advertising with transaction evidencing documents.

At 602, the transaction routine 600 commences when the remote computer 150 contacts the data center 200 to establish a session for conducting a transaction. In this manner, the remote computer 150 and the data center 200 recognize each other as authentic using any conventional authentication technique. This generally involves the user of the remote computer 150 establishing an SSL connection with data center 200. In this manner sensitive user information (credit card number, transaction details, user name, etc.) are not inadvertently disclosed to an unauthorized party. Once the session has been established, at 604, the data center 200 obtains relevant data necessary to process an electronic transaction. This typically involves the user purchasing a product, requesting a service (document translation, grocery delivery, etc.) or document (ticket, gift certificate, magazine article, etc.) and transmitting at least a subset of transaction related information to data center 200. For example, in the case of a theater ticket, the user would select a desired show (theater location, date, and time), number of tickets and seat location and transmit this information to data center 200. (It will be understood that part of the transaction related information might not be transmitted since the data center may obtain this information from the transaction profiling database 210). Data center 200 may also require the user to provide additional information, such as the user's zip code, in order to provide more targeted advertising. Preferably, this is accomplished by having the user enter or select appropriate data fields in a menu screen before uploading to data center 200. Next, at 606, the data center 200 checks the data received from the user for consistency. If the data received contains inconsistencies, then the user may be instructed to check the data and resubmit it.

Next, at 608, data center 200 searches the third party advertiser database 206 for those advertisers that are interested in advertising in conjunction with the transaction evidencing document. For the reasons discussed above, not every third party advertiser may want to advertise in conjunction with every transaction evidencing document. Generally, this step involves reviewing an ad data profile 207 that is maintained in advertiser database 206 for each advertisement and comparing transaction related information and information from transaction profiling database 210 to ad data profile 207. Referring now to Fig. 5, a schematic representation of ad data profile file 207 associated with a third party message to be printed in conjunction with transaction evidencing document 20 (40) by the transaction evidencing system 10 is shown. The ad data includes: graphic image data 207a; subsidy rate data 207b; billing rate 207c and restriction data. The restriction data may include transaction restriction data and consumer restriction. Preferably, the consumer restriction data includes: geographic restriction data 207d, and consumer profile restriction data 207e (obtained from other purchases). Preferably, the transaction restriction data includes: geographic restriction data 207f, type of transaction restriction data 207g and value of transaction restriction data 207h.

The graphic image data 207a is representative of the desired message and may be stored in any manner of well known formats, such as: PDF, JPEG, GIF and the like. The subsidy rate data 207b includes information corresponding to the credit value that will be applied to the content provider's account, the billing rate 207c includes information corresponding to the amount charged to the advertiser's for advertising in conjunction with transaction evidencing document 20 (40). The billing rate data 207c also includes information corresponding to the debit value that will be applied to the third party advertiser's account in conjunction with printing of the third party message on transaction evidencing document 20 (40). The geographic restriction data 207d provides an indication of what geographic areas the third party advertiser wants to target. This may be manifested by a restriction on the provider location, event location, the user location or any combination of the three. The consumer restriction data 207e provides an indication of the target audience. For example, distinctions may be made between: users purchasing orchestra seats and users purchasing balcony seats, users that fly more than others and users that fly first class. Preferably, the commercial versus residential distinction may be obtained directly from the user during the transaction. Alternatively, this may also be accomplished by reviewing user database 204 for certain 'key words" indicative of company, such as: inc., incorporated, co., company and the like. As another example that may be used independent from or in combination with the example previously discussed, the demographics database 212 allows further targeting of messages. Generally, income, age and other demographic statistics are available for different regions of the country. Thus, a zip code provided by the user or related to the transaction (e.g., location of a theater, delivery address for groceries, etc.) may be cross referenced to the demographics database 212 and the resulting demographic statistics compared with the third party advertiser's requirements. For example, a luxury car manufacturer may only want its ads going to private residences from regions where the average income is above a predetermined threshold. The date restriction data 207i provides an indication of what dates the third party advertiser wants to advertise. For example, expiration dates could be established beyond which the message will not be dispensed. As another example, periodic cycles (first week of month, last week of month, on Mondays, 2 weeks before a holiday, etc.) could be established during which the message is available for printing. The multi-ad restriction data 207i provides an indication of whether or not the third party advertiser allows another third party advertiser to occupy other advertising space on transaction evidencing document 20 (40). The sentiment being that a multiplicity of messages will dilute the effectiveness of the individual messages versus if the individual messages were used singularly. If the third party advertiser allows other advertisers, then a reduced credit indicated in the subsidy rate data 207b and a reduced debit indicated in the billing rate data 207c might be applied when multiple messages are employed. The ad space restriction data 207k provides an indication of which ad zones (such as in Fig. 2A and Fig. 2B) the third party advertiser authorizes for use with the message. For example, a third party advertiser may wish to print an ad as part of a theater ticket, but not along side the ticket. Thus, the third party advertiser may exercise some control over where the message is printed. Similarly, as an option, the user may also be given a choice over which ad is printed. For example, a user purchasing a concert ticket may be given a choice between two or more restaurant coupons (ads) for restaurants near the concert. Those skilled in the art will recognize that the above described restriction data 207d through 207k may be utilized independently from each other or in any desired combination. Still other restrictions may be utilized, such as count limits. It should now be apparent that the messages that meet the restriction criteria and are available for printing represent a subset of the total number of messages that are potentially available.

Again referring primarily to Fig. 4 while referencing the structure of Figs. 1, 2, 3 and 5, once the available messages are determined according to the restriction data described above, at 610, the relevant messages are sent to remote computer 150 for printing in conjunction with the transaction evidencing document 20 (40). At this point, several ads may be presented to the user on the remote computer 150 via the user interface. This provides the user with the opportunity to view and select the available messages. Next, at 612, if messages have been presented to the user for selection, the user selects a message for printing in conjunction with the transaction evidencing document 20 (40). It will be understood that such user selection would be available in a small office/home office environment where the user conducts the transaction using a personal computer. Otherwise, at 612, the data center selects the message for printing. It will be understood that the data center selection would likely occur automatically in transactions conducted at retail stores.

For the sake of clarity and brevity, a description is provided where only one message 36 (52) is selected for printing in advertising section 34 (50) of transaction evidencing document 20 (40). However, those skilled in the art will recognize that, as described above, multiple messages may be printed. Next, at 614, the data center 200 generates a print data packet to be downloaded to the remote computer 150 for use in printing the transaction evidencing document 20 (40) and the selected message 36 (52). The print data packet also contains graphic information necessary to print the selected message 36 (52). Once the data packet has been received, the user can print the transaction evidencing document and ad using printer 120. Next, at 616, the data center 200 updates the user account to reflect the transaction information, such as: the date, the type of transaction, the selected message 36 (52), any fees associated with providing the above described services and any other relevant data. Similarly, the data center 200 updates the selected third party advertiser's account to reflect the transaction information, such as: the date, the selected message 36 (52), the corresponding advertising fee, any additional fees associated with providing the above described services and any other relevant data. The data center 200 also updates the transaction profile database based upon transaction and user data, such as: user zip code, type of purchase, etc. Either concurrent with the transaction or later, the data center 200 exercises the preferred payment vehicle for the user and the selected third party advertiser, respectively.

Based on the above description and the associated drawings, it should now be apparent that the present invention improves the ability of third party advertisers to reach more efficiently their target audience through advertising in conjunction with transaction evidencing documents.

Many features of the preferred embodiments represent design choices selected to best exploit the inventive concept as implemented in a particular electronic commerce environment. However, those skilled in the art will recognize that various modifications can be made without departing from the spirit of the present invention. For example, the transaction profiling database 210 and the third party advertiser database 206 may be resident at remote computer 150. Thus, a portion of the functionality of the data center 200 described above would be off loaded to remote computer 150. Remote computers 150 could then periodically receive updated information concerning transaction profiling 210 and third party advertiser database 206 by any conventional means. This might be the case if the remote computer 150 were, for example, a ticketing kiosk in a train station or a cash register in a retail store. Thus, those skilled in the art will recognize that there are many ways to distribute the functionality described above between the data center 200 and the remote computer 150. As yet another example, different billing rates may be applied for multi-color versus mono-color printing capability.

Therefore, the inventive concept in its broader aspects is not limited to the specific details of the preferred embodiments described above, but is defined by the appended claims and their equivalents.

## Claims

1. A transaction evidencing system, comprising:
a computer (150) in operative communication with a printer (120) for printing a document (20) as part of an electronic transaction;
a data center (200) in operative communication with the computer (150), the computer being located remotely from the data center, the data center (200) including a processor (208) for processing the electronic transactions and a plurality of advertiser accounts, each of the plurality of advertiser accounts including respective ad data having message data and restriction data, each of the message data representative of a message, respectively, for printing on the document (20);
a control system (152,202) in operative communication with the data center processor (208) and the computer (150) for:
establishing a transaction session between the computer (150) and the data center (200) for the electronic transaction initiated by a consumer;
obtaining profile information;
using the profile information and the restriction data from the plurality of advertiser accounts to identify a subset of messages available for printing on the document; and
sending to the computer (150) data relating to the electronic transaction and at least one of the subset of messages to be printed with the document.

2. The system of Claim 1, wherein the profile is obtained from information provided by the consumer during the electronic transaction or prior electronic transactions.

3. The system of Claim 1, wherein the profile is obtained from information included as part of the electronic transaction.

4. The system of Claim 1, wherein the electronic transaction is a credit card transaction and the profile is obtained from records maintained for a credit card account of the consumer.

5. The system of Claim 4, wherein the data center is maintained by an administrator for the credit card account.

6. The system of Claim 1, wherein the control system (152,202) is further for:
receiving from a consumer an indication of a selected message from the subset of messages that the consumer authorizes for printing on the document.

7. The system of Claim 1, wherein the control system is further for:
receiving from a credit card vendor a selection of said at least one of the subset of messages to be printed with the document.

8. The system of Claim 1, wherein the control system is further for:
selecting said at least one of the subset of messages to be printed with the document based on at least one of the type and content of the electronic transaction.

9. The system of Claim 6, wherein the control system (152,202) is further for:
applying a debit to the advertiser account corresponding to the selected message; and
applying a credit of up to the amount of the debit to at least one of a content provider, a service provider and a data center operator for the electronic transaction.

10. The system of Claim 6, wherein each of the restriction data, respectively, includes consumer restriction data and non-consumer restriction data.

11. The system of Claim 10, wherein the consumer restriction data, respectively, includes at least information relating to one of the following: commercial/residential restrictions; demographic restrictions and geographic restrictions.

12. The system of Claim 11, wherein:
the document includes a plurality of ad space zones (34); and
the non-consumer restriction data, respectively, includes at least information relating to one of the following: transaction count restrictions; multi-ad restrictions; date restrictions; ad space zone restrictions and budget restrictions.

13. A method of operating a transaction evidencing system, the system including a computer (150) in operative communication with a printer (120) for printing a document (20) as part of an electronic transaction and a data center (200) in operative communication with the computer (150), the computer being located remotely from the data center (200), the data center including a processor (208) for processing the electronic transactions and a plurality of advertiser accounts (206), each of the plurality of advertiser accounts including respective ad data having message data and restriction data, each of the message data representative of a message, respectively, for printing on the document (20), the method comprising the steps of:
establishing a transaction session between the computer (150) and the data center (200) for the electronic transaction initiated by a consumer;
obtaining profile information; and
using the profile information and the restriction data from the plurality of advertiser accounts to identify a subset of messages available for printing on the document (20).

14. The method of Claim 13, wherein the profile is obtained from information provided by the consumer during the electronic transaction or prior electronic transactions.

15. The method of Claim 13, further comprising the step of:
receiving from a consumer an indication of a selected message from the subset of messages that the consumer authorizes for printing on the document (20).

16. The method of Claim 15, further comprising at least one of the steps of:
applying a debit to the advertiser account corresponding to the selected message; and
applying a credit of up to the amount of the debit to at least one of a content provider, a service provider and a data center operator for the electronic transaction.

17. The method of Claim 16, wherein each of the restriction data, respectively, includes consumer restriction data and non-consumer restriction data.

18. The method of Claim 17, wherein the consumer restriction data, respectively, includes at least information relating to one of the following: commercial/residential restrictions; demographic restrictions and geographic restrictions.

19. The method of Claim 18, wherein:
the document includes a plurality of ad space zones (34); and
the non-consumer restriction data, respectively, includes at least information relating to one of the following: transaction count restrictions; multi-ad restrictions; date restrictions; ad space zone restrictions and budget restrictions.

20. A method of operating a data center (200), the data center in operative communication with a computer system (150) including a printer (120) for printing a message on a document evidencing an electronic transaction, the method comprising the steps of:
maintaining a server (208) for processing the electronic transactions;
maintaining a plurality of advertiser accounts, each of the plurality of advertiser accounts including respective ad data having message data and restriction data, each of the message data representative of a message, respectively, for printing on the document (20);
establishing a transaction session with the computer system (150) by a consumer ;
receiving profile information relating to at least one of a consumer initiating the electronic transaction and the electronic transaction; and
using the profile information and the restriction data from the plurality of advertiser accounts to identify a subset of messages available for printing on the document.

21. The method of Claim 20, further comprising the step of:
receiving from the consumer an indication of a selected message from the subset of messages that the consumer authorizes for printing on the document.

22. The method of Claim 21, further comprising the steps of:
applying a debit to the advertiser account corresponding to the selected message; and
applying a credit of up to the amount of the debit to at least one of a content provider, a service provider and a data center operator for the electronic transaction.

23. The method of Claim 22, wherein each of the restriction data, respectively, includes consumer restriction data and non-consumer restriction data.

24. The method of Claim 23, wherein the consumer restriction data, respectively, includes at least information relating to one of the following: commercial/residential restrictions; demographic restrictions and geographic restrictions.

25. The method of Claim 24, wherein:
the document (20) includes a plurality of ad space zones (34); and
the non-consumer restriction data, respectively, includes at least information relating to one of the following: transaction count restrictions; multi-ad restrictions; date restrictions; ad space zone restrictions and budget restrictions.

26. The system of Claim 2, wherein the control system (152,202) is further for:
communicating a data packet to the computer (150), the data packet including first data indicative of a transaction portion of the document (20) and second data indicative of the selected message.

27. The system of Claim 26, wherein the computer utilizes the data packet to cause the printer (120) to print the selected message in conjunction with evidence of the transaction on the document (20).

## Patentansprüche

1. Transaktionsnachweissystem umfassend:
einen Computer (150), der mit einem Drucker (120) zum Drucken eines Dokumentes (20) als Teil einer elektronischen Transaktion in Wirkverbindung steht;
ein Datenzentrum (200), das mit dem Computer (150) in Wirkverbindung steht, wobei der Computer vom Datenzentrum entfernt angeordnet ist, das Datenzentrum einen Prozessor (208) zur Verarbeitung der elektronischen Transaktionen und einer Vielzahl von Werbeträgererklärungen enthält, jede der Vielzahl von Werbeträgererklärungen entsprechende Mitteilungsdaten und Begrenzungsdaten aufweisende Kleinanzeigendaten enthält und wobei die Mitteilungsdaten eine Mitteilung zum Drucken auf das Dokument (20) repräsentieren; und
ein Steuersystem (152, 202), das mit dem Datenzentrumprozessor (208) und dem Computer (150) in Wirkverbindung steht, um
eine Transaktionskonferenz zwischen dem Computer (150) und dem Datenzentrum (200) für die von einem Verbraucher initiierte elektronische Transaktion aufzubauen;
eine Profilinformation zu schaffen;
die Profilinformation und die Begrenzungsdaten von einer Vielzahl von Werbeträgererklärungen zwecks Identifizierung eines zum Drucken auf das Dokument verfügbaren Untersatzes von Mitteilungen zu nutzen; und
zum Computer (150) Daten, welche sich auf die elektronische Transformation und wenigstens einen des mit dem Dokument zu druckenden Untersatz von Mitteilungen beziehen, zu senden.

2. System nach Anspruch 1, bei dem das Profil aus einer Information gewonnen wird, die durch den Verbraucher während der elektronischen Transaktion oder vor elektronischen Transformationen bereitgestellt wird.

3. System nach Anspruch 1, bei dem das Profil aus Information bereitgestellt wird, die als Teil der elektronischen Transaktion enthalten ist.

4. System nach Anspruch 1, in dem die elektronische Transaktion eine Kreditkartentransaktion ist und das Profil aus Aufzeichnungen erhalten wird, die für einen Kreditkartennachweis des Verbrauchers bereitgestellt werden.

5. System nach Anspruch 4, in dem das Datenzentrum durch einen Verwalter für den Kreditkartennachweis bereitgestellt wird.

6. System nach Anspruch 1, in dem das Steuersystem (152, 202) weiterhin
zur Aufnahme einer Anzeige einer ausgewählten Nachricht aus dem Untersatz von Nachrichten von einem Verbraucher empfangen wird, welche den Verbraucher zum Drucken auf das Dokument autorisiert,
dient.

7. System nach Anspruch 1, in dem das Steuersignal weiterhin
zum Empfang einer Auswahl wenigstens eines auf das Dokument zu druckenden Untersatzes von Nachrichten von einem Kreditkartenvertreiber
dient.

8. System nach Anspruch 1, in dem das Steuersystem weiterhin
zur Auswahl wenigstens eines auf das Dokument zu druckenden Untersatzes von Nachrichten auf der Basis wenigstens eines Typs und des Inhaltes der elektronischen Transaktion
dient.

9. System nach Anspruch 6, in dem das Steuersystem (152, 202) weiterhin zur Abgabe einer Belastung für den Werbenachweis entsprechend der ausgewählten Botschaft; und
Abgabe eines Kredits bis zur Höhe der Belastung zu wenigstens einem Wettbewerbsanbieter und einer Datenzentrums-Bedienungsperson für die elektronische Transaktion
dient.

10. System nach Anspruch 6, in dem die Begrenzungsdaten Verbraucherbegrenzungsdaten und
Nichtverbraucher-Begrenzungsdaten enthalten.

11. System nach Anspruch 10, in dem die Verbraucher-Begrenzungsdaten wenigstens eine Information enthalten, die sich auf folgendes bezieht:
Kommerz/Residenzbegrenzungen; demographische Begrenzungen oder geographische Begrenzungen.

12. System nach Anspruch 11, in dem
das Dokument eine Vielzahl von Kleinanzeigenraumzonen (34) enthält; und
die Nichtverbraucher-Begrenzungsdaten wenigstens eine Information enthalten, die sich auf folgendes bezieht:
Transaktionszählungsbegrenzungen; Mehrfach-Kleinanzeigenbegrenzungen; Datumsbegrenzungen; Kleinanzeigen-Raumzonenbegrenzungen oder Budgetbegrenzungen.

13. Verfahren zum Betrieb eines Transaktionsnachweissystems, das einen Computer (150) enthält, der mit einem Drucker (120) zum Drucken eines Dokumentes (20) als Teil einer elektronischen Transaktion und ein mit dem Computer (150) in Wirkverbindung stehendes Datenzentrum (200) enthält, wobei der Computer vom Datenzentrum (200) entfernt angeordnet ist, das Datenzentrum einen Prozessor (208) zur Verarbeitung der elektronischen Transaktionen und einer Vielzahl von Werbeträgererklärungen enthält, jede der Vielzahl von Werbeträgererklärungen entsprechende Kleinanzeigendaten enthält, welche Mitteilungsdaten und Begrenzungsdaten aufweisen, und wobei jede der Mitteilungsdaten für eine Botschaft zum Drucken auf das Dokument (20) repräsentativ sind, mit folgenden Schritten:
Aufbauen einer Transaktionskonferenz zwischen dem Computer (150) und dem Datenzentrum (200) für die durch einen Verbraucher initiierte elektronische Transaktion;
Schaffen einer Profilinformation; und
Nutzen der Profilinformation und der Begrenzungsdaten aus einer Vielzahl von Werbeträgernachweisen zur Identifizierung eines für das Drucken auf das Dokument (20) zur Verfügung stehenden Untersatzes von Nachrichten.

14. Verfahren nach Anspruch 13, bei dem das Profil aus einer Information erhalten wird, welche durch den Verbraucher während der elektronischen Transaktion oder vor elektronischen Transaktionen bereitgestellt wird.

15. Verfahren nach Anspruch 13, umfassend folgenden Schritt:
Empfangen einer Anzeige einer ausgewählten Nachricht aus dem Untersatz von Nachrichten von einem Verbraucher, welche den Verbraucher zum Drucken auf das Dokument (20) autorisiert.

16. Verfahren nach Anspruch 15, weiterhin umfassend wenigstens einen der Schritte:
Einfügen einer Belastung in den Werbeträgernachweis entsprechend der ausgewählten Nachricht; und
Angeben eines Kredits bis zu einem Betrag der Belastung für einen Wettbewerbsanbieter, einem Serviceanbieter oder eine Datenzentrums-Bedienungsperson für die elektronische Transaktion.

17. Verfahren nach Anspruch 16, bei dem die Begrenzungsdaten Verbraucher-Begrenzungsdaten bzw. Nichtverbraucher-Begrenzungsdaten enthalten.

18. Verfahren nach Anspruch 17, bei dem die Verbraucher-Begrenzungsdaten sich auf folgendes beziehende Information enthalten:
Kommerz/Residenzbegrenzungen;
Demographische Begrenzungen oder geographische Begrenzungen.

19. Verfahren nach Anspruch 18, bei dem
das Dokument eine Vielzahl von Kleinanzeigen-Raumzonen (34) enthält und
die Nichtverbraucher-Begrenzungsdaten Information enthalten, welche sich auf folgendes bezieht:
Transaktionszählungsbegrenzungen;
Mehrfach-Kleinanzeigenbegrenzungen; Datumsbegrenzungen; Kleinanzeigen-Raumzonenbegrenzungen oder Budgetbegrenzungen.

20. Verfahren zum Betrieb eines Datenzentrums (200), das mit einem Computersystem (150) in Wirkverbindung steht, das einen Drucker (120) zum Drucken einer eine elektronische Transaktion nachweisenden Nachricht auf einem Dokument enthält, mit folgenden Schritten:
Bereitstellen eines Servers (208) zum Verarbeiten der elektronischen Transaktionen;
Bereitstellen einer Vielzahl von Werbeträgererklärungen, wobei jede der Vielzahl von Werbeträgererklärungen entsprechende Mitteilungsdaten und Begrenzungsdaten aufweisende Kleinanzeigendaten enthält und die Mitteilungsdaten jeweils eine Mitteilung repräsentieren;
Aufbauen einer Transaktionskonferenz mit dem Computersystem (150) durch einen Verbraucher;
Empfangen einer Profilinformation, die sich auf wenigstens einen, die elektronische Transaktion initiierenden Verbraucher und die elektronische Transaktion bezieht; und
Benutzen der Profilinformation und der Begrenzungsdaten aus einer Vielzahl von Werbeträgererklärungen zur Identifizierung eines für das Drucken auf das Dokument verfügbaren Untersatzes von Mitteilungen.

21. Verfahren nach Anspruch 20, weiterhin umfassend folgenden Schritt:
Empfangen einer Anzeige einer ausgewählten Nachricht aus dem Untersatz von Nachrichten vom Verbraucher, welche den Verbraucher zum Drucken auf das Dokument autorisiert.

22. Verfahren nach Anspruch 21, weiterhin folgende Schritte umfassend:
Einfügen einer Belastung in den Werbeträgernachweis entsprechend der ausgewählten Nachricht; und
Angabe eines Kredites bis zur Höhe der Belastung für einen Wettbewerbsanbieter, einen Serviceanbieter oder eine Datenzentrums-Bedienungsperson für die elektronische Transaktion.

23. Verfahren nach Anspruch 22, bei dem die Begrenzungsdaten Verbraucher-Begrenzungsdaten bzw. Nichtverbraucher-Begrenzungsdaten enthalten.

24. Verfahren nach Anspruch 23, bei dem die Verbraucher-Begrenzungsdaten sich auf das die folgendes beziehende Information enthalten:
Kommerz/Residenz-Begrenzungen ; demographische Begrenzungen oder geographische Begrenzungen.

25. Verfahren nach Anspruch 24, bei dem:
das Dokument (20) eine Vielzahl von Kleinanzeigen-Raumzonen (34) enthält; und
die Nichtverbraucher-Begrenzungsdaten sich auf folgendes beziehende Information enthalten:
Transaktionszählungsbegrenzungen; Mehrfach-Kleinanzeigenbegrenzungen; Datumsbegrenzungen; Kleinanzeigen-Raumzonenbegrenzungen oder Budgetbegrenzungen.

26. System nach Anspruch 2, in dem das Steuersystem (152, 202) weiterhin
zur Übertragung eines Datenpakets zum Computer (150) dient, wobei das Datenpaket erste Daten, welche einen Transaktionsteil des Dokumentes (20) anzeigen, sowie zweite Daten, welche die ausgewählte Botschaft anzeigen, enthält.

27. System nach Anspruch 26, in dem der Computer das Datenpaket nutzt, um den Drucker (120) zu veranlassen, die ausgewählte Nachricht in Verbindung mit dem Nachweis der Transaktion auf das Dokument (20) zu drucken.

## Revendications

1. Système de mise évidence de transactions, comprenant :
un ordinateur (150) en communication opérationnelle avec une imprimante (120) destinée à imprimer un document (20) en tant qu'une partie d'une transaction électronique ;
un centre de données (200) en communication opérationnelle avec l'ordinateur (150), l'ordinateur étant localisé à distance du centre de données, le centre de données (200) incluant un processeur (208) destiné à traiter les transactions électroniques et une pluralité de comptes d'annonceur, chacun de la pluralité de comptes d'annonceur incluant des données de publicité respectives ayant des données de message et des données de restriction, chacune des données de message étant représentatives d'un message destiné, respectivement, à être imprimé sur le document (20) ; et
un système de contrôle (152, 202), en communication opérationnelle avec le processeur de centre de données (208) et l'ordinateur (150), destiné à :
- établir une session de transaction entre l'ordinateur (150) et le centre de données (200) pour la transaction électronique initiée par un consommateur ;
- obtenir des informations de profil ;
- utiliser les informations de profil et les données de restriction provenant de la pluralité de comptes d'annonceur afin d'identifier un sous-ensemble de messages disponibles pour impression sur le document ; et
- envoyer vers l'ordinateur (150) des données ayant rapport à la transaction électronique et à au moins un message du sous-ensemble de messages à imprimer avec le document.

2. Système selon la revendication 1, dans lequel le profil est obtenu à partir d'informations fournies par le consommateur pendant la transaction électronique ou des transactions électroniques antérieures.

3. Système selon la revendication 1, dans lequel le profil est obtenu à partir d'informations incluses en tant qu'une partie de la transaction électronique.

4. Système selon la revendication 1; dans lequel la transaction électronique est une transaction de carte de crédit et le profil est obtenu à partir d'enregistrements maintenus pour un compte de carte de crédit du consommateur.

5. Système selon la revendication 4, dans lequel le centre de données est maintenu par un administrateur pour le compte de carte de crédit.

6. Système selon la revendication 1, dans lequel le système de contrôle (152, 202) est en outre destiné à :
recevoir depuis un consommateur une indication d'un message sélectionné à partir du sous-ensemble de messages que le consommateur autorise pour impression sur le document.

7. Système selon la revendication 1, dans lequel le système de contrôle est en outre destiné à :
recevoir depuis un fournisseur de cartes de crédit une sélection dudit au moins un message du sous-ensemble de messages à imprimer avec le document.

8. Système selon la revendication 1, dans lequel système de contrôle est en outre destiné à :
sélectionner ledit au moins un message du sous-ensemble de messages à imprimer avec le document sur la base d'au moins élément du groupe composé du type et du contenu de la transaction électronique.

9. Système selon la revendication 6, dans lequel le système de contrôle (152, 202) est en outre destiné à :
- appliquer un débit au compte d'annonceur correspondant au message sélectionné ; et
- appliquer un crédit allant jusqu'au montant du débit vers au moins un membre du groupe composé d'un fournisseur de contenus, d'un fournisseur de services et d'un opérateur de centre de données pour la transaction électronique.

10. Système selon la revendication 6, dans lequel chacune des données de restriction inclut, respectivement, des données de restriction de consommateur et des données de restriction non de consommateur.

11. Système selon la revendication 10, dans lequel les données de restriction de consommateur incluent, respectivement, au moins des informations ayant rapport à l'une des suivantes : restrictions commerciales / résidentielles ; restrictions démographiques et restrictions géographiques.

12. Système selon la revendication 11, dans lequel:
le document inclut une pluralité de zones d'espace publicitaire (34) ; et
les données de restriction non de consommateur incluent au moins des informations ayant rapport à l'une des suivantes : restrictions du nombre de transactions ; restrictions de publicités multiples; restrictions de date ; restrictions de zone d'espace publicitaire et restrictions budgétaires.

13. Procédé de mise en fonctionnement d'un système de mise en évidence de transactions, le système incluant un ordinateur (150) en communication opérationnelle avec une imprimante (120) destinée à imprimer un document (20) en tant qu'une partie d'une transaction électronique et un centre de données (200) en communication opérationnelle avec l'ordinateur (150), l'ordinateur étant localisé à distance du centre de données (200), le centre de données incluant un processeur (208) destiné à traiter les transactions électroniques et une pluralité de comptes d'annonceur (206), chacun de la pluralité de comptes d'annonceur incluant des données de publicité respectives ayant des données de message et des données de restriction, chacune des données de message étant représentatives d'un message destiné, respectivement, à être imprimé sur le document (20) ; le procédé comprenant les étapes consistant à :
- établir une session de transaction entre l'ordinateur (150) et le centre de données (200) pour la transaction électronique initiée par un consommateur ;
- obtenir des informations de profil ; et
- utiliser les informations de profil et les données de restriction provenant de la pluralité de comptes d'annonceur afin d'identifier un sous-ensemble de messages disponibles pour impression sur le document (20).

14. Procédé selon la revendication 13, dans lequel le profil est obtenu à partir d'informations fournies par le consommateur pendant la transaction électronique ou des transactions électroniques antérieures.

15. Procédé selon la revendication 13, comprenant en outre l'étape consistant à :
recevoir depuis un consommateur une indication d'un message sélectionné à partir d'un sous-ensemble de messages que le consommateur autorise pour impression sur le document (20).

16. Procédé selon la revendication 15, comprenant en outre au moins l'une des étapes consistant à :
- appliquer un débit au compte d'annonceur correspondant au message sélectionné ; et
- appliquer un crédit allant jusqu'au montant du débit vers au moins un membre du groupe composé d'un fournisseur de contenus, d'un fournisseur de services et d'un opérateur de centre de données pour la transaction électronique.

17. Procédé selon la revendication 16, dans lequel chacune des données de restriction inclut, respectivement, des données de restriction de consommateur et des données de restriction non de consommateur.

18. Procédé selon la revendication 17, dans lequel les données de restriction de consommateur incluent, respectivement, au moins des informations ayant rapport à l'une des suivantes : restrictions commerciales / résidentielles ; restrictions démographiques et restrictions géographiques.

19. Procédé selon la revendication 18, dans lequel :
le document inclut une pluralité de zones d'espace publicitaire (34) ; et
les données de restriction non de consommateur incluent, respectivement, au moins des informations ayant rapport à l'une des suivantes : restrictions du nombre de transactions ; restrictions de publicités multiples ; restrictions de date ; restrictions de zone d'espace publicitaire et restrictions budgétaires.

20. Procédé de mise en fonctionnement d'un centre de données (200), le centre de données étant en communication opérationnelle avec un système d'ordinateur (150) induant une imprimante (120) destinée à imprimer un message sur un document mettant en évidence une transaction électronique, le procédé comprenant les étapes consistant à :
maintenir un serveur (208) destiné à traiter les transactions électroniques ;
maintenir une pluralité de comptes d'annonceur, chacun de la pluralité de comptes d'annonceur incluant des données respectives de publicité ayant des données de message et des données de restriction, chacune des données de message étant représentative d'un message destiné, respectivement, à être imprimé sur le document (20) ;
établir une session de transaction avec le système d'ordinateur (150) par un consommateur ;
recevoir des informations de profil ayant rapport à au moins un élément du groupe composé d'un consommateur initiant la transaction électronique et de la transaction électronique ; et
utiliser les informations de profil et les données de restriction provenant de la pluralité de comptes d'annonceur afin d'identifier un sous-ensemble de messages disponibles pour impression sur le document.

21. Procédé selon la revendication 20, comprenant en outre l'étape consistant à :
recevoir depuis le consommateur une indication d'un message sélectionné à partir du sous-ensemble de messages que le consommateur autorise pour impression sur le document.

22. Procédé selon la revendication 21, comprenant en outre les étapes consistant à:
appliquer un débit au compte d'annonceur correspondant au message sélectionné ; et
appliquer un crédit allant jusqu'au montant du débit vers au moins un membre du groupe composé d'un fournisseur de contenus, d'un fournisseur de services et d'un opérateur de centre de données pour la transaction électronique.

23. Procédé selon la revendication 22, dans lequel chacune des données de restriction inclut, respectivement, des données de restriction de consommateur et des données de restriction non de consommateur.

24. Procédé selon la revendication 23, dans lequel les données de restriction de consommateur incluent, respectivement, au moins des informations ayant rapport à l'une des suivantes :
restrictions commerciales/résidentielles ; restrictions démographiques et restrictions géographiques.

25. Procédé selon la revendication 24, dans lequel :
le document (20) inclut une pluralité de zones d'espace publicitaire (34) ; et
les données de restriction non de consommateur incluent, respectivement, au moins des informations ayant rapport à l'une des suivantes : restrictions du nombre de transactions ; restrictions de publicités multiples ; restrictions de date ; restrictions de zone d'espace publicitaire et restrictions budgétaires.

26. Système selon la revendication 2, dans lequel le système de contrôle (152, 202) est en outre destiné à :
communiquer un paquet de données vers l'ordinateur (150), le paquet de données incluant des premières données indicatives d'une portion de transaction du document (20) et des deuxièmes données indicatives du message sélectionné.

27. Système selon la revendication 26, dans lequel l'ordinateur utilise le paquet de données pour faire en sorte que l'imprimante (120) imprime le message sélectionné conjointement avec une évidence de la transaction sur le document (20).
